# EUROPÄISCHE PATENTSCHRIFT

(11) **EP 1 527 019 B1**
(45) Veröffentlichungstag und Bekanntmachung des Hinweises auf die Patenterteilung: **08.03.2006**
(21) Anmeldenummer: 03760684.5
(22) Anmeldetag: 23.06.2003
(51) Int. Cl.: C02F 1/04, C02F 1/02, B01D 3/14, B01D 53/14

(54) **VORRICHTUNG UND VERFAHREN ZUR THERMISCHEN WASSERAUFBEREITUNG**
THERMAL WATER TREATMENT DEVICE AND METHOD
DISPOSITIF ET PROCEDE DE TRAITEMENT THERMIQUE DE L'EAU

(30) Priorität: 25.06.2002 DE 10229103
(43) Veröffentlichungstag der Anmeldung: 04.05.2005
(73) Patentinhaber: AMI Agrolinz Melamine International GmbH, 4021 Linz (AT)
(72) Erfinder: RUECH, Wolfgang, A-4753 Taiskirchen (AT); NEUMÜLLER, Christoph, A-4020 Linz (AT); SCHRÖDER, Frank, A-04683 Albrechtshain (AT)
(74) Vertreter: Gross, Felix
(86) Internationale Anmeldenummer: PCT/EP2003/006589
(87) Internationale Veröffentlichungsnummer: WO 2004/000733

(56) Entgegenhaltungen:
- WO-A-02/081379
- GB-A- 1 497 493
- US-A- 2 838 574
- US-A- 5 447 195
- US-A- 5 548 906
- PATENT ABSTRACTS OF JAPAN vol. 2000, no. 12, 3. Januar 2001 (2001-01-03) & JP 2000 237761 A (KIKAI KAGAKU KENKYUSHO:KK), 5. September 2000 (2000-09-05)

## Beschreibung

Die Erfindung betrifft eine Vorrichtung nach dem Oberbegriff des Anspruchs 1 und ein Verfahren nach dem Oberbegriff des Anspruchs 9.

In der Verfahrenstechnik müssen häufig Abwasserströme von unerwünschten Stoffen gereinigt werden. Dazu ist es bekannt, die Abwässer thermisch zu behandeln.

Damit die Behandlung erfolgreich ist, d.h. die für die Einleitung in ein Gewässer nötige Güte hat, ist eine gewisse Verweilzeit bei vorbestimmten Temperaturen notwendig.

Der vorliegenden Erfindung liegt daher die Aufgabe zugrunde, eine Vorrichtung zu schaffen, die besonders für die Reinigung von Abwässern geeignet ist.

Diese Aufgabe wird erfindungsgemäß durch eine Vorrichtung mit den Merkmalen des Anspruchs 1 gelöst.

Durch die Verwendung von mindestens zwei Strömungsleitmitteln, welche abwechselnd parallel als Überlaufwehr und Unterlaufwehr zur Bildung von Kammern, wird eine im wesentlichen mäanderförmige Führung des Abwassers im Behälter erreicht. Damit wird die Rückvermischung vermieden. Durch jeweils ein Heizmittel, das zwischen zwei Strömungsleitmitteln nur im unteren Teil der Kammern des Behälters (R5) am Beginn einer aufsteigenden Strömung angeordnet ist, wird eine unterstützende Strömung erzeugt und die Einstellung einer vorbestimmten Temperatur ermöglicht. Die Strömung wird durch die aufsteigenden Blasen unterstützt.

Die mindesten zwei Strömungsleitmittel sind vorteilhafterweise aus einer Wand, bevorzugt einem Siebboden, gebildet, um die die Abwasserströmung geleitet wird.

Dabei ist es vorteilhaft, wenn ein Heizmittel eine von Dampf durchströmbare Vorrichtung, insbesondere ein Rohrbündel aufweist. Auch ist es vorteilhaft, wenn das Heizmittel eine elektrische Heizung aufweist.

Eine besonders vorteilhafte Ausgestaltung liegt vor, wenn der Behälter zylindrisch ausgebildet ist, wobei die Längsachse horizontal ausgebildet ist. Bei einer weiteren vorteilhaftem Ausgestaltung weist der Behälter an der Oberseite eine Sammelleitung zur Abführung von Gasen auf.

Auch ist es vorteilhaft, wenn mindestens zwei Vorrichtungen dieser Art in Reihe geschaltet sind.

Die Aufgabe wird für melaminhaltige Abwässer auch durch ein Verfahren mit den Merkmalen des Anspruchs 8 gelöst. Demnach wird eine effiziente Zersetzung die Temperatur in der Vorrichtung größer gleich 190°C eingestellt, insbesondere im Bereich von 220°C bis 240°C. Dabei liegt der Druck vorteilhafter Weise zwischen 30 und 60 bar, insbesondere zwischen 30 bar und 60 bar.

Die Erfindung wird nachfolgend unter Bezugnahme auf die Figuren der Zeichnungen an mehreren Ausführungsbeispielen näher erläutert. Es zeigen:
- Fig. 1: ein Fließbild einer Abwasserreinigung einer Melaminanlage;
- Fig. 2a: eine schematische Schnittansicht entlang der Längsachse einer Ausführungsform einer erfindungsgemäßen Vorrichtung;
- Fig. 2b: eine schematische Schnittansicht quer zur Längsachse entlang der Ebene B-B in Fig. 2a;
- Fig. 2c: eine schematische Schnittansicht quer zur Längsachse entlang der Ebene C-C in Fig. 2b.

Im Folgenden wird das eine Ausführungsform des erfindungsgemäßen Verfahrens und eine Ausführungsform einer erfindungsgemäßen Vorrichtung anhand der Aufbereitung von Abwasser einer Melamin-Anlage dargestellt. Grundsätzlich ist die Vorrichtung aber auch zur Aufbereitung von anderen Abwässern verwendbar.

Bevor auf die konstruktiven Details der Vorrichtung eingegangen wird, soll das Abwasserreinigungsverfahren beschrieben werden.

Das von einer Melaminanlage bzw. aus einem Sammelbehältersystem kommende Abwasser enthält eine Mischung aus folgenden Stoffen bzw. ihren Ammonium- und Natriumsalzen (typische Werte):
- Ammoniak 1-10 g/kg
- Kohlendioxid 1-18 g/kg
- Harnstoff bei An- und Abfahrprozessen
- Cyanursäure 0.1-0.2 g/kg
- Ammelid 2-6 g/kg
- Ammelin 4-12 g/kg
- Melamin 2-6 g/kg
- Melam 0.01g/kg
- Cyanmelamin
- Ureidomelamin
- NaOH 7-17 g/kg
Fogt pH-Wert von um 12

Ziel ist es, aus die schädlichen Wasserinhaltsstoffe des Abwassers zu zersetzen, um CO₂, NH₃ bzw. HCO₃⁻, CO₂⁻ und NH₄⁺ zu erhalten. Es soll ein neutrales bis mindestens 30°C kühlbares, ammoniakfreies Abwasser (je nach Einleitbedingungen) vorliegen. NH₃ und Teile des CO₂ werden weiter verwendet.

Die am stärksten aus dem Abwasser ausfallende Verbindung ist Melamincyanurat, ein Salz der Cyanursäure. Deshalb muss die Cyanursäure weit genug abgebaut werden.

Bei der Abkühlung ausfallendes Melamincyanurat verlegt sofort die Kühler. Wird der Festsoff in einem Kristallisierungsapparat auskristallisiert ist das aufwendig und die Verwendung des Feststoffes wird erschwert. Melamin hat meist noch eine etwas höhere Konzentration, die aber, wenn der Ammoniak gut abgetrennt ist, für die Einleitbedingungen hinsichtlich der erlaubten Grenzwerte meist noch nicht kritisch ist.

Alle Melamin- und Oxoamminotriazine (OAT) werden mit Wasser stufenweise zu Ammoniak und Kohlendioxid abgebaut. Der Gleichgewichtsdruck, der sich über der Lösung einstellt und der gehalten werden muss, um Verdampfung zu verhindern, hängt von der Temperatur und dem Ammoniak- und Kohlendioxidgehalt der Lösung ab.

Um eine akzeptable Abbaugeschwindigkeit der unerwünschten Substanzen im Abwasser zu erzielen, muss die Temperatur größer gleich 190°C gewählt werden. Je höher die Temperatur gewählt wird, desto schneller wird die Reaktion des Abbaus ablaufen, was den Apparat tendenziell verkleinert und verbilligt. Aber mit steigender Temperatur steigt der Gleichgewichtsdruck, was den Apparat tendenziell wegen der steigenden Wandstärken verteuert. Ein geringer Teil kann auch verdampft werden. Da der Dampf eine wesentlich höhere Ammoniak- und Kohlendioxidkonzentration als die Flüssigkeit besitzt, sinkt die Konzentration dieser Stoffe in der Flüssigphase und der Gleichgewichtsdruck fällt, was tendenziell zu einer Verbilligung des Apparates führt. Da der Hauptteil des Dampfes aber aus Wasser besteht und die Wärmebilanz beim Gegenstrom-Wärmetausch Ein-/Austritt stört, stellt die Verdampfung einen erheblichen Energieverlust dar, der die Prozesskosten tendenziell erhöht.

Zwischen diesen Tendenzen wird ein Optimum gesucht, das bei 220 bis 260°C Reaktionstemperatur und einem Druck von 30 bis 100 bar, insbesondere 30 bar bis 60 bar liegt. Die Verdampfung ergibt sich dann aus der Beladung des Abwassers.

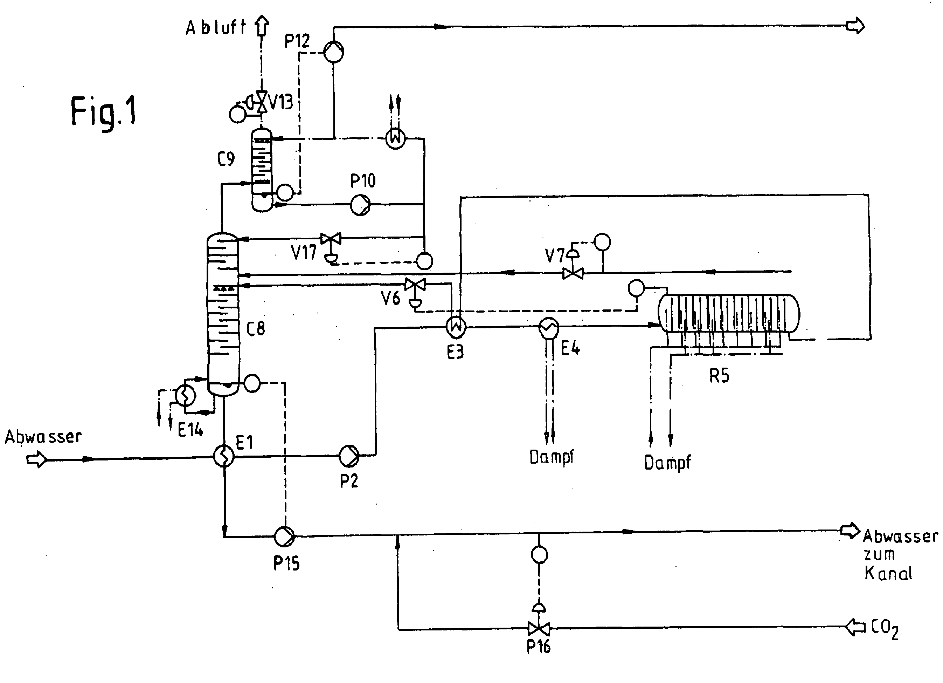

Das Grundfließbild ist Fig. 1 dargestellt. Die erfindungsgemäße Vorrichtung zur thermsichen Zerlegung ist der Hydrolizer R5, der über vom Abwasserstrom durchströmt wird. Im folgenden wird die Anbindung dieses Apparates an die Melaminanlage dargestellt.

Das belastete Abwasser wird im Wärmetauscher E1 mit der Restwärme des am Kolonnensumpf C8 abgezogenen Abwassers vorgewärmt. Mit der Pumpe P2 wird es auf Hydrolysedruck gebracht, d.h. den Druck bei dem der thermische Abbau betrieben werden soll. Im Gegenstromwärmetauscher E3 wird es mit der Wärme des vom Hydrolizer R5 abströmenden Wasser fast bis zur Reaktionstemperatur vorgeheizt. Der Wärmetauscher E4 dient zum Anfahren der Anlage und zum Ausgleich von Abstrahlungs- und Wärmetauschverlusten. Im beheizten Hydrolizer R5 finden die chemischen Umsetzungen zu Ammoniak und Kohlendioxid bei Reaktionsdruck und Reaktionstemperatur statt. Dabei fällt der pH-Wert. Reaktionswärmen und Verdampfungsverluste werden über die Heizregister im Hydrolizer R5 zugeführt. Der Druck im Hydrolizer R5 wird über das Entspannungsventil V7 geregelt. Der Dampf wird der Kolonne C8 zugeführt. Der Füllstand im Hydrolizer R5 wird über das Entspannungsventil V8 geregelt, nachdem der Abstrom seine Wärme im Gegenstromwärmetauscher E3 an den Zustrom abgegeben hat. Damit entstehen abgesehen von den Verdampfungsverlusten minimale Wärmeverluste, auf beiden Seiten des Wärmetauschers herrscht der gleiche Druck, Reaktionsdruck und am Flüssigentspannungsventil V6 kommt es nicht zur Teilverdampfung.

In der geteilt ausgeführten Kolonne C8, C9 wird in der Kolonne C8 der Ammoniak ausgetrieben. Die Kolonne C8 wird am Sumpf über den Wärmetauscher E14 beheizt. Das Abwasser wird am Sumpf der Kolonne über den erwähnten Wärmetauscher E1 mit der Pumpe P15 füllstandsgeregelt abgezogen. Das Abwasser wird mit Kohlendioxid neutralisiert und dem Kanal zugeführt. Der Dampf der Kolonne C8 wird der Gaswäsche C9 unten zugeführt. Am Sumpf von C9 wird über P10 Flüssigkeit abgezogen. Diese wird über V17 Stromgeregelt in einen Rücklauf für C8 und in einen über E11 stark gekühlten Rücklauf für C9 aufgeteilt. Durch die starke Kühlung des Rücklaufes von C9 kann der gesamte Gasstrom in C9 kondensiert werden. Ein Teil des von P10 geförderten Stromes wird darüber hinaus über eine Füllstandsregelung über die Pumpe P12 ausgekreist. Dieser Strom ist eine konzentrierte wässrige Lösung von Ammoniak und Kohlendioxid der in der Harnstoffanlage aufgearbeitet wird. Über das Ventil V13 wird der Druck in den Kolonnen gehalten und Inert ausgekreist. Die Abluft kann einer Wäsche zugeführt werden.

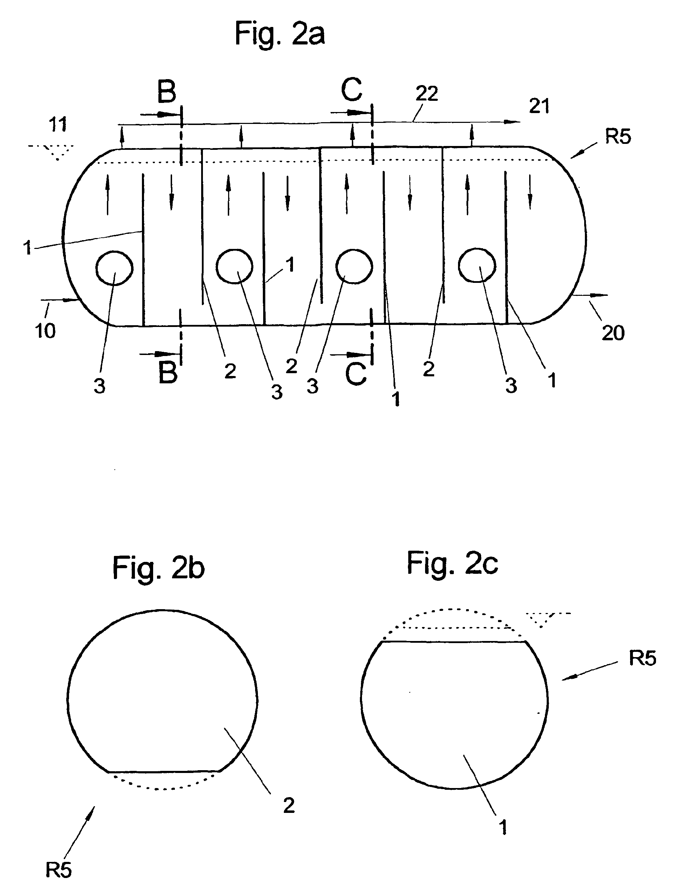

In Fig. 2a, 2b, 2c sind eine Ausführungsform des Hydrolizer R5 dargestellt. Fig. 2a zeigt dabei eine schematische Schnittansicht, die Fig. 2b und 2c zeigen Schnitte entlang der Lininen B-B, bzw. C-C.

Der Hydrolizer R5 kann prinzipiell auch in mehreren in Reihe geschalteten Apparaten ausgeführt werden, wobei der Hauptgasanteil im ersten entsteht.

Der Hydrolizer R5 ist ein zylindrischer liegender Apparat, dessen Enden mit elliptischen Böden abgeschlossen sind. Das Innere besteht aus einem System von mehreren verbundenen Kammern, die durch die wechselseitig angeordneten Über- und Unterlaufwehre 1, 2 als Strömungsleitmittel entstehen. Die Wehre sorgen für ein wechselseitiges Auf- und Abströmen der Flüssigkeit und sorgen so für geringe Rückvermischung. Das Abwasser tritt am Eintritt 10 in den Hydrolyzer R5 und strömt gemäß der angegebenen Pfeilrichtung durch den Apparat und tritt beim Auslass 20 wieder aus dem Apparat aus.

Im unteren Teil der Kammern mit Aufstrom befindet sich jeweils ein Heizregister 3 als Heizmittel. Die durch den Wärmeeintrag einsetzende Blasenbildung unterstützt so die Gesamtströmung.

Das Heizregister 3 besteht z.B. aus einer Rohrschlange oder einem Rohrbündel, die mit Dampf beheizbar sind. Auch andere Einbauten z.B. Siebböden sind an Stelle der Wehre denkbar. Der Flüssigkeitsspiegel 11 steht zwischen der Apparateoberkante und der Oberkante der Überlaufwehre 1, so dass einerseits der Überlauf gewährleistet ist und andererseits ein gemeinsamer Gasraum zwischen Auf- und Abstromkammer entsteht. Jeder Gasraum ist in eine darüber liegende Sammelleitung 21 eingebunden, die Gasabführung 22 und Atmung und damit einheitlichen Füllstand in allen Kammern ermöglicht.

In den Fig. 2b und 2c sind zwei Schnittansichten entlang der Ebene B-B bzw. C-C dargestellt. Dabei zeigt die Fig. 2b eine Seitenansicht eines Strömungsleitmittels 2 mit einem Unterlaufwehr. Fig. 2a zeigt ein Stömungsleitmittel 1 mit einem Überlaufwehr.

## Patentansprüche

1. Vorrichtung zur thermischen Abwasserreinigung mit einem vom Abwasser durchströmbaren Behälter
**gekennzeichnet durch**
a) mindestens zwei Strömungsleitmittel (1,2), welche abwechselnd parallel als Überlaufwehr und Unterlaufwehr zur Bildung von Kammern für eine mäanderförmige Führung des Abwassers im Behälter (R5) angeordnet sind, und
b) jeweils ein Heizmittel (3), das zwischen zwei Strömungsleitmitteln (1,2) nur im unteren Teil der Kammern des Behälters (R5) am Beginn einer aufsteigenden Strömung angeordnet ist, und
c) zur Erzeugung einer unterstützenden Strömung in den Kammern und zur Einstellung einer vorbestimmten Temperatur dient.

2. Vorrichtung nach Anspruch 1, **dadurch gekennzeichnet, dass** das Strömungsleitmittel (1, 2) aus einer Wand, insbesondere aus einem Siebboden, gebildet wird, um die die Abwasserströmung geleitet wird.

3. Vorrichtung nach mindestens einem der vorhergehenden Ansprüche, **dadurch gekennzeichnet, dass** das Heizmittel (3) eine von Dampf durchströmbare Vorrichtung, insbesondere ein Rohrbündel aufweist.

4. Vorrichtung nach mindestens einem der vorhergehenden Ansprüche, **dadurch gekennzeichnet, dass** das Heizmittel (3) eine elektrische Heizung aufweist.

5. Vorrichtung nach mindestens einem der vorhergehenden Ansprüche, **dadurch gekennzeichnet, dass** der Behälter zylindrisch ausgebildet ist, wobei die Längsachse horizontal ausgebildet ist.

6. Vorrichtung nach mindestens einem der vorhergehenden Ansprüche, **dadurch gekennzeichnet, dass** der Behälter an der Oberseite eine Sammelleitung (22) zur Abführung von Gasen aufweist.

7. Vorrichtung nach mindestens einem der vorhergehenden Ansprüche, **dadurch gekennzeichnet, dass** mindestens zwei Vorrichtungen (R5) in Reihe geschaltet sind.

8. Verfahren zur thermischen Abwasserreinigung von melaminhaltigem Abwasser unter Verwendung einer Vorrichtung mit einem vom Abwasser durchströmbaren Behälter
**dadurch gekennzeichnet, dass** in der Vorrichtung
a) mindestens zwei Strömungsleitmittel (1,2), welche abwechselnd parallel als Überlaufwehr und Unterlaufwehr zur Bildung von Kammern für eine mäanderförmige Führung des Abwassers im Behälter (R5) angeordnet sind, und
b) jeweils ein Heizmittel (3), das zwischen zwei Strömungsleitmitteln (1,2) nur im unteren Teil der Kammern des Behälters (R5) am Beginn einer aufsteigenden Strömung angeordnet ist, und
c) zur Erzeugung einer unterstützenden Strömung in den Kammern und zur Einstellung einer vorbestimmten Temperatur dient, und
d) dass die Temperatur in der Vorrichtung (R5) größer gleich 190° ist.

9. Verfahren nach Anspruch 8, **dadurch gekennzeichnet, dass** die Temperatur in der Vorrichtung (R5) bevorzugt im Bereich von 220°C bis 230°C liegt.

10. Verfahren nach den Ansprüchen 8 oder 9, **dadurch gekennzeichnet, dass** der Druck in der Vorrichtung (R5) zwischen 30 und 100 bar.

11. Verfahren nach einem der Ansprüche 8 bis 10, **dadurch gekennzeichnet, dass** der Druck in der Vorrichtung (R5) bevorzugt zwischen 30 bar und 60 bar liegt.

12. Verfahren nach einem der Ansprüche 8 bis 11, **dadurch gekennzeichnet, dass** das Abwasser vor dem Hydrolizer (R5) mindestens einmal vorgewärmt wird.

13. Verfahren nach einem der Ansprüchen 8 bis 12, **dadurch gekennzeichnet, dass** mindestens eine Vorwärmung des Zulaufs des Hydroliters durch einen Wärmetauscher (E3) erfolgt, der im Gegenstrom mit dem Ausgangsstrom des Hydrolizers (R5) beheizt wird.

14. Verfahren nach einem der Ansprüche 8 bis 13, **dadurch gekennzeichnet, dass** das Abwasser über den Hydrolizer (R5) zu einer Kolonne (C8) geleitet wird, wobei das Kopfprodukt der Kolonne (C8) zur Gaswäsche (C9) geleitet wird.

## Claims

1. Apparatus for thermal wastewater cleanup having a vessel through which wastewater can flow,
**characterized by**
a) at least two flow guide means (1, 2) which are arranged alternately in parallel as overflow weir and underflow weir for the formation of chambers for a meander-type guidance of the wastewater in the vessel (R5), and
b) in each case one heating means (3) which is arranged between two flow guide means (1, 2) only in the lower part of the chambers of the vessel (R5) at the start of an ascending flow, and
c) serves to generate a supporting flow in the chambers and to set a predetermined temperature.

2. Apparatus according to Claim 1, **characterized in that** the flow guide means (1, 2) is formed by a wall, in particular a sieve plate, around which the wastewater flow is passed.

3. Apparatus according to at least one of the preceding claims, **characterized in that** the heating means (3) has an apparatus through which steam can flow, in particular a tube bundle.

4. Apparatus according to at least one of the preceding claims, **characterized in that** the heating means (3) has an electrical heater.

5. Apparatus according to at least one of the preceding claims, **characterized in that** the vessel is constructed so as to be cylindrical, the longitudinal axis being constructed so as to be horizontal.

6. Apparatus according to at least one of the preceding claims, **characterized in that** the vessel has on the top side a manifold (22) for removing gases.

7. Apparatus according to at least one of the preceding claims, **characterized in that** at least two apparatuses (R5) are connected in series.

8. Process for the thermal wastewater treatment of melamine-containing wastewater using an apparatus having a vessel through which wastewater can pass
**characterized in that**, in the apparatus
a) at least two flow guide means (1, 2) are arranged alternately in parallel as overflow weir and underflow weir for the formation of chambers for a meander-type guidance of the wastewater in the vessel (R5), and
b) in each case one heating means (3) is arranged between two flow guide means (1, 2) only in the lower part of the chambers of the vessel (R5) at the start of an ascending flow, and
c) serves to generate a supporting flow in the chambers and to set a predetermined temperature, and
d) **in that** the temperature in the apparatus (R5) is greater than or equal to 190°.

9. Process according to Claim 8, **characterized in that** the temperature in the apparatus (R5) is preferably in the range from 220 to 230°C.

10. Process according to Claims 8 or 9, **characterized in that** the pressure in the apparatus (R5) is between 30 and 100 bar.

11. Process according to one of Claims 8 to 10, **characterized in that** the pressure in the apparatus (R5) is preferably between 30 bar and 60 bar.

12. Process according to one of Claims 8 to 11, **characterized in that** the wastewater, upstream of the hydrolyser (R5), is preheated at least once.

13. Process according to one of Claims 8 to 12, **characterized in that** at least one preheating of the hydrolyser feed is performed by a heat exchanger (E3) which is heated in countercurrent flow with the outlet stream of the hydrolyser (R5).

14. Process according to one of Claims 8 to 13, **characterized in that** the wastewater is passed via the hydrolyser (R5) to a column (C8), the top product of the column (C8) being passed to the gas scrubber (C9).

## Revendications

1. Dispositif en vue de l'épuration thermique d'une eau résiduaire à l'aide d'une cuve capable d'être traversée par l'eau résiduaire
**caractérisé par**
a) au moins deux dispositifs de guidage de courant (1,2), qui sont disposés en alternance de manière parallèle en tant que réservoir de trop-plein et en tant que déversoir de fond en vue de la formation de chambres pour une conduite sous forme de méandres de l'eau résiduaire dans la cuve (R5); et
b) à chaque fois, un moyen de chauffage (3), qui est disposé entre deux dispositifs de guidage de courant (1,2) uniquement dans la partie inférieure des chambres de la cuve (R5) au début d'un courant montant, et
c) qui sert en vue de produire un courant de support dans les chambres et en vue de régler une température prédéterminée.

2. Dispositif selon la revendication 1, **caractérisé en ce que** le dispositif de guidage de courant (1, 2) est formé à partir d'une paroi, en particulier d'un fonds à tamis, autour de laquelle le courant d'eau résiduaire est conduit.

3. Dispositif selon au moins l'une quelconque des revendications précédentes, **caractérisé en ce que** le moyen de chauffage (3) présente un dispositif capable d'être traversé par de la vapeur, en particulier, un faisceau de tubes.

4. Dispositif selon au moins l'une quelconque des revendications précédentes, **caractérisé en ce que** le moyen de chauffage (3) présente un chauffage électrique.

5. Dispositif selon au moins l'une quelconque des revendications précédentes, **caractérisé en ce que** la cuve est formé de manière cylindrique, l'axe longitudinal étant formé de manière horizontale.

6. Dispositif selon au moins l'une quelconque des revendications précédentes, **caractérisé en ce que** la cuve présente, sur la face supérieure, un conduit de collecte (22) en vue de l'évacuation des gaz.

7. Dispositif selon au moins l'une quelconque des revendications précédentes, **caractérisé en ce qu'**au moins deux dispositifs (R5) sont montés en série.

8. Procédé en vue de l'épuration thermique d'eau résiduaire contenant de la mélamine par utilisation d'un dispositif avec une cuve capable d'être traversée par l'eau résiduaire
**caractérisé en ce que**, dans le dispositif
a) au moins deux dispositifs de guidage de courant (1,2) sont disposés en alternance de manière parallèle en tant que réservoir de trop-plein et en tant que déversoir de fond en vue de la formation de chambres pour une conduite sous forme de méandres de l'eau résiduaire dans la cuve (R5); et
b) à chaque fois, un moyen de chauffage (3) est disposé entre deux dispositifs de guidage de courant (1,2) uniquement dans la partie inférieure des chambres de la cuve (R5) au début d'un courant montant, et
c) sert en vue de produire un courant de support dans les chambres et en vue de régler une température prédéterminée et
d) **en ce que** la température dans le dispositif (R5) est supérieure ou égale à 190°C.

9. Procédé selon la revendication 8, **caractérisé en ce que** la température dans le dispositif (R5) se situe, de préférence, dans le domaine de 220°C à 230°C.

10. Procédé selon les revendications 8 ou 9, **caractérisé en ce que** la pression dans le dispositif (R5) se situe entre 30 et 100 bars.

11. Procédé selon l'une quelconque des revendications 8 à 10, **caractérisé en ce que** la pression dans le dispositif (R5) se situe, de préférence, entre 30 bars et 60 bars.

12. Procédé selon l'une quelconque des revendications 8 à 11, **caractérisé en ce que** l'eau résiduaire est chauffée au moins à une reprise avant l'hydroliseur.

13. Procédé selon l'une quelconque des revendications 8 à 12, **caractérisé en ce qu'**a lieu au moins un chauffage préalable de l'admission de l'hydroliseur grâce à un échangeur thermique (E3), qui est chauffé à contre-courant à l'aide du courant de sortie de l'hydroliseur (R5) .

14. Procédé selon l'une quelconque des revendications 8 à 13, **caractérisé en ce que** l'eau résiduaire est conduite à travers l'hydroliseur (R5) à une colonne (C8), le produit de tête de la colonne (C8) étant conduit au lavage de gaz (C9).
